(19) Europäisches Patentamt
European Patent Office
Office européen des brevets

(11) **EP 2 060 390 B1**

(12) **EUROPEAN PATENT SPECIFICATION**

(45) Date of publication and mention
of the grant of the patent:
**25.09.2013 Bulletin 2013/39**

(21) Application number: **07791856.3**

(22) Date of filing: **02.08.2007**

(51) Int Cl.:
*B60C 1/00* *(2006.01)*    *B32B 25/00* *(2006.01)*
*C08L 21/00* *(2006.01)*    *C08K 3/06* *(2006.01)*
*C08K 3/22* *(2006.01)*    *C08K 5/25* *(2006.01)*

(86) International application number:
**PCT/JP2007/065182**

(87) International publication number:
**WO 2008/029577 (13.03.2008 Gazette 2008/11)**

(54) **RUBBER COMPOSITE AND TIRES MADE BY USING THE SAME**

KAUTSCHUKVERBUNDSTOFF UND DARAUS HERGESTELLTE REIFEN

MATÉRIAU COMPOSITE CAOUTCHOUTEUX ET PNEUMATIQUES FABRIQUÉS À PARTIR DE CELUI-CI

(84) Designated Contracting States:
**DE ES FR GB IT**

(30) Priority: **08.09.2006 JP 2006244806**

(43) Date of publication of application:
**20.05.2009 Bulletin 2009/21**

(73) Proprietor: **Bridgestone Corporation**
**Tokyo 104-8430 (JP)**

(72) Inventors:
• **MUKAI, Uchu**
**Kodaira-shi**
**Tokyo 187-8531 (JP)**
• **MISUMI, Kazuhiko**
**Kodaira-shi**
**Tokyo 187-8531 (JP)**

• **SHIMADA, Takashi**
**Kodaira-shi**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
EP-A- 1 258 338        WO-A-03/066353
JP-A- 08 176 314        JP-A- 10 207 177
JP-A- 2002 338 749      JP-A- 2005 170 970
JP-A- 2005 170 970      JP-A- 2006 062 379
US-B1- 6 880 600

## Description

BACKGROUND OF THE INVENTION

The present invention relates to a composite of a rubber composition comprising a diene base rubber cross-linked by sulfur, more specifically to a rubber composite improved in a problem originating in a difference in concentrations of blending agents in adjacent rubber compositions constituting the composite and a tire prepared by using the same.

RELATED ART

In a composite constituted by rubber compositions which are used for tires and have different blend contents, usually when a difference in concentrations of materials such as blended chemicals and the like is brought about, diffusion and transfer thereof take place so that a difference in the concentrations is decreased. As a result thereof, a rubber composition in the vicinity of an interface between members deviates from a blend composition which is initially set, and the expected characteristics can not be exhibited in a certain case. In particular, the crack growth potential and the adhesive property are reduced to result in bringing about troubles in a durability of a tire.
For example, when a difference in a concentration of sulfur is caused between adjacent members, sulfur is transferred from a high sulfur-blended rubber to a low sulfur-blended rubber, and a larger blend amount of sulfur than a set blend amount thereof is present in the low sulfur-blended rubber in the vicinity of an interface. As a result thereof, a balance of a cross-linking agent is broken in the vicinity of an interface, and expected characteristics which are initially set can not be exhibited.

A specific problem caused by the difference in the concentration described above is brought about between a coating rubber for burying a steel cord and an adjacent rubber thereof, and many investigations are made as an improving method therefor (refer to, for example, patent documents 1 to 2).
A deterioration in adhesion of a steel coating rubber with a steel cord which is caused by heat is considered to be attributable to that an adhesion layer comprising copper sulfide which is heated is reacted with zinc eluting from a plating to form a layer of zinc sulfide in the adhesion layer and that the adhesive force is reduced. It is considered that in order to enhance a heat resistant life in adhesion, copper sulfide is inhibited from being broken to prevent zinc from eluting. In order to achieve the above matter, it is considered to be effective to blend sulfur in a large amount.

When sulfur is blended in a large amount in order to enhance a heat resistant life in adhesion of a steel cord with a coating rubber therefor, a fracture property, particularly a heat resistant deterioration property is worsened.
On the other hand, sulfur is transferred to an adjacent member during vulcanization due to a difference in a sulfur blending amount from that of the adjacent member, and it is meaningless to increase a sulfur amount of a coating rubber in order to enhance a heat resistant life in adhesion with a steel cord. On the contrary, a heat resistance of the adjacent member is reduced as well. However, in order to enhance a heat resistant life in adhesion of a steel cord with a coating rubber, it is an essential condition to blend sulfur in a large amount, and sulfur is blended usually in an amount of 5 to 10 parts by mass in terms of a sulfur content based on 100 parts by mass of a rubber component.

Disclosed in the patent document 1 are large-sized tires for a heavy load and off-road tires in which a cushion rubber adjacent to a carcass layer and a belt layer is blended with prescribed polysulfide to inhibit sulfur from transferring from a coating rubber to thereby solve inferior adhesion of a steel cord with the coating rubber in the carcass layer and the belt layer of the tire and enhance a durability and a failure time of the tire.
Further, disclosed in the patent document 2 are a rubber composition in which 40 to 70 parts by weight of carbon black, 0.1 to 3.0 parts by weight of an organic acid cobalt salt and 5 to 10 parts by weight of the total sulfur component including sulfur and a silane coupling agent containing specific sulfur based on 100 parts by weight of a rubber component in a rubber composition are contained to thereby allow a heat resistance to a fracture property of rubber to be compatible with a heat resistance to adhesion and tires.

In the techniques disclosed in the above patent documents, the purposes described above can be achieved by inhibiting sulfur from being transferred to adjacent members, but specific members and raw materials have to be used, and problems in terms of costs and administration are left.
Accordingly, a difference brought about between characteristics in a central part of a member in a rubber composite and characteristics in the vicinity of an interface to other adjacent members has to be controlled as much as possible without using specific new raw materials and members.

Patent document 1: Japanese Patent Application Laid-Open No. 67358/2005
Patent document 2: Japanese Patent Application Laid-Open No. 75888/2005

EP- A- 1258338 discloses a steel cord- rubber composite that has improved initial adhesion property and adhesion property against ageing between the steel cord and the rubber composition with improved manufacturing cost efficiency. The steel cord- rubber composition composite includes a coating layer and a steel cord and the coating layer includes an inner coating layer formed of a rubber composition containing a rubber component, a cobalt compound and sulphur and directly covering the steel cord, and an outer coating layer formed of a rubber composition of which contents of cobalt compound and sulphur are smaller than those of the inner coating layer and coating the outer portion of the inner coating layer.

DISCLOSURE OF THE INVENTION

An object of the present invention is to provide a rubber composite improved in a problem originating in a difference in a concentration of a blending agent, particularly sulfur in adjacent rubber compositions comprising a rubber composition containing a diene base rubber cross-linked by sulfur without using new raw materials and members and a tire prepared by using the same.

Intensive researches repeated by the present inventors in order to achieve the object described above have resulted in finding that the above object can be achieved by blending zinc oxide, and an antioxidant and/or a naphthoic hydrazide compound in amounts obtained by specific relational equations into a low sulfur concentration rubber composition of a composite in which a difference in a sulfur concentration between adjacent members is a specific amount or more that is, blending zinc oxide, and the antioxidant and/or the naphthoic hydrazide compound in advance into the low sulfur concentration rubber composition by estimating an amount of sulfur after transferred to a low sulfur concentration composition side. The present invention has been completed based on the above knowledge.

That is, the present invention provides a rubber composite constituted of at least two layers of members comprising a rubber composition containing a diene base rubber cross-linked by sulfur, wherein a difference in a concentration of sulfur between adjacent members in the rubber composite described above is 1.5 part by mass or more based on 100 parts by mass of a rubber component in the rubber composition; zinc oxide is blended in an amount satisfying a condition shown in the following equation (I) based on 100 parts by mass of a rubber component in a low sulfur concentration rubber composition among the adjacent members, and an antioxidant and/or a naphthoic hydrazide compound are blended in an amount satisfying a condition shown in the following equation (II) based on 100 parts by mass of the rubber component in the low sulfur concentration rubber composition:

```
blending amount (parts by mass) of zinc oxide in the low
sulfur concentration rubber composition>Sb × 1.3 + (Sa −
Sb) × 0.3                        (I)
```

(wherein Sa represents a blending amount (parts by mass) of sulfur in the high sulfur concentration rubber composition, and Sb represents a blending amount (parts by mass) of sulfur in the low sulfur concentration rubber composition) and

```
blending amount (mole) of the antioxidant and/or the
naphthoic hydrazide compound in the low sulfur concentration
rubber composition>0.005 + (Sa − Sb)/2000          (II)
```

(wherein Sa and Sb represent the same contents as described in the equation (I)); and
a tire prepared by using the above rubber composite as a member which is not brought into direct contact with the ambient air.

BEST MODE FOR CARRYING OUT THE INVENTION

First, the composite of the present invention is a rubber composite constituted of at least two layers of members comprising a rubber composition containing a diene base rubber cross- linked by sulfur, a difference in a concentration of sulfur between adjacent members in the rubber composite described above is 1.5 part by mass or more based on 100 parts by mass of a rubber component in the rubber composition; zinc oxide is blended in an amount satisfying a condition shown in the following equation (I) based on 100 parts by mass of a rubber component in a low sulfur concentration rubber composition among the adjacent members, and an antioxidant and/or a naphthoic hydrazide compound are blended in an amount satisfying a condition shown in the following equation (II) based on 100 parts by mass of the rubber component in the low sulfur concentration rubber composition:

$$\text{blending amount (parts by mass) of zinc oxide in the low sulfur concentration rubber composition} > Sb \times 1.3 + (Sa - Sb) \times 0.3 \qquad (I)$$

(wherein Sa represents a blending amount (parts by mass) of sulfur in a high sulfur concentration rubber composition, and Sb represents a blending amount (parts by mass) of sulfur in the low sulfur concentration rubber composition) and

$$\text{blending amount (mole) of the antioxidant and/or the naphthoic hydrazide compound in the low sulfur concentration rubber composition} > 0.005 + (Sa - Sb)/2000 \qquad (II)$$

(wherein Sa and Sb represent the same contents as described in the equation (I) ) .

In this respect, "a blending amount (mole) of the antioxidant and/or the naphthoic hydrazide compound in the low sulfur concentration rubber composition" means a total blending amount thereof when both of the antioxidant and the naphthoic hydrazide compound are blended, a blending amount thereof when only the antioxidant is blended and a blending amount thereof when only the naphthoic hydrazide compound is blended.

In the present invention, a difference in a sulfur concentration between the adjacent members in the rubber composite has to be 1.5 part by mass or more based on 100 parts by mass of the rubber component in the rubber composition described above. If a difference in a sulfur concentration between the adjacent members in the rubber composite is 1.5 part by mass or more, sulfur is transferred from the high sulfur-blended rubber to the low sulfur-blended rubber particularly in vulcanization, and a larger blend amount of sulfur than a set blend amount thereof is present in the low sulfur-blended rubber in the vicinity of an interface thereto. As a result thereof, a balance of a cross-linking agent is broken in the vicinity of the interface, and characteristics which are initially expected can not be exhibited. Accordingly, an amount of sulfur after it is transferred to the low sulfur concentration rubber composition side is estimated to blend zinc oxide which is a vulcanization accelerating agent satisfying the condition shown in the equation (I) described above and the antioxidant and/or the naphthoic hydrazide compound satisfying the condition shown in the equation (II) described above in advance into the low sulfur concentration rubber composition, whereby the balance described above is obtained; a difference produced between characteristics in a central part of the members in the composite and characteristics in the vicinity of an interface to other adjacent members is controlled; and a reduction in the curability, particularly growth of cracks can be inhibited.

Further, a blending amount of zinc oxide based on 100 parts by mass of the rubber component in the low sulfur concentration rubber composition described above is set preferably to an amount satisfying a condition shown in the following equation (III), and a blending amount of the antioxidant and/or the naphthoic hydrazide compound is set preferably to an amount satisfying a condition shown in the following equation (IV) :

$$\text{blending amount (parts by mass) of zinc oxide in the low sulfur concentration rubber composition} \geqq Sb \times 1.5 + (Sa - Sb) \times 0.5 \qquad (III)$$

(wherein Sa and Sb represent the same contents as described in the equation (I) ) and

blending amount (mole) of the antioxidant and/or the naphthoic hydrazide compound in the low sulfur concentration rubber composition>0.005 + (Sa − Sb)/1000          (IV)

(wherein Sa and Sb represent the same contents as described in the equation (I) ) .

An upper limit of the concentration difference of sulfur described above shall not specifically be restricted, and it is usually about 10 parts by mass.

Further, an upper limit of a blending amount of zinc oxide which is obtained according to the equations (I) and (III) shall not specifically be restricted, and it is usually about 10 parts by mass based on 100 parts by mass of the rubber component. Also, an upper limit of a blending amount of the antioxidant and/or the naphthoic hydrazide compound which is obtained according to the equations (II) and (IV) shall not specifically be restricted, and it is usually about $2 \times 10^{-2}$ mole based on 100 parts by mass of the rubber component.

The diene base rubber constituting the rubber composition according to the present invention includes polyisoprene rubbers such as natural rubbers, synthetic polyisoprene rubbers and the like, polybutadiene rubbers, styrene-butadiene copolymer rubbers and the like. The polyisoprene rubbers are preferred, and the natural rubbers are particularly preferred. Also, the rubber component constituting the low sulfur concentration rubber composition described above comprises preferably polyisoprene rubber in a proportion of 50 % by mass or more. The proportion is more preferably 80 % by mass or more, particularly preferably 100 % by mass. Controlling a use amount of polyisoprene in the range described above makes it possible to sufficiently obtain the targeted effects without allowing the effects thereof to the rubber chemicals such as zinc oxide and the antioxidant and/or the naphthoic hydrazide compound to be restricted.

The antioxidant and/or the naphthoic hydrazide compound blended into the low sulfur concentration rubber composition described above shall not specifically be restricted, and amine base antioxidants, phenol base antioxidants, derivatives of 3- hydroxy- 2- naphthoic hydrazide (HNH) and derivatives of 1- hydroxy- 2- naphthoic hydrazide can be used. At least 50 % by mass of the antioxidant and/or the naphthoic hydrazide compound is preferably the amine base antioxidant and/or the derivative of 3- hydroxy- 2- naphthoic hydrazide (HNH) . A blending amount of the antioxidant and/or the naphthoic hydrazide compound described above based on 100 parts by mass of the rubber component in the low sulfur concentration rubber composition is limited by the equation (II) or the equation (IV) described above, and it is usually $1.0 \times 10^{-3}$ mole to $2.0 \times 10^{-2}$ mole.

The amine base antioxidants shall not specifically be restricted and include amine- ketone base antioxidants such as 2, 2, 4- trimethyl- 1, 2- dihydroquinoline polymers, 6- ethoxy- 1, 2- dihydro- 2, 2, 4- trimethylquinoline and reaction products of diphenylamine with acetone; aromatic secondary amine base antioxidants such as phenyl- 1- naphthylamine, alkylated diphenylamine, octylated diphenylamine, 4, 4'- bis ($\alpha$, $\alpha$- dimethylbenzyl) diphenylamine, p- (p- toluenesulfonylamide) diphenylamine, N, N'- di- 2- naphthyl- p- phenylenediamine, N, N'- diphenyl- p- phenylenediamine, N- phenyl- N'- isopropyl- p- phenylenediamine, N- (1, 3- dimethylbutyl)- N'- phenyl- p- phenylenediamine, N- phenyl- N'- (3- methacryloyloxy- 2- hydroxypropyl)- p- phenylenediamine and the like; and monophenol base antioxidants such as 2, 6- di- tert- butyl- 4- methylphenol, 2, 6- di- tert- butyl- 4- ethylphenol and mono (or di or tri) ($\alpha$- methylbenzyl) phenol. Among them, the aromatic secondary amine base antioxidant which is excellent in a crack growth potential resistance, for example, N- (1, 3- dimethylbutyl)- N'- phenyl- p- phenylenediamine is preferred. The above amine base antioxidants may be used alone or in combination of two or more kinds thereof.

Also, the naphthoic hydrazide compound has an effect of reducing vulcanization return and an effect of reducing the heat generating property.

The naphthoic hydrazide compound includes, for example, the derivatives of 3- hydroxy- 2- naphthoic hydrazide (HNH) and the derivatives of 1- hydroxy- 2- naphthoic hydrazide. The derivatives of 3- hydroxy- 2- naphthoic hydrazide (HNH) include, for example, 3- hydroxy- 2- naphthoic hydrazides such as 3- hydroxy- 2- naphthoic (1- methylethylidene) hydrazide, 3- hydroxy- 2- naphthoic (1- methylpropylidene) hydrazide, 3- hydroxy- 2- naphthoic (1, 3- dimethylpropylidene) hydrazide, and 3- hydroxy- 2- naphthoic (1- phenylethylidene) hydrazide. Among them, 3- hydroxy- N'- (1, 3- dimethylethylidene)- 2- naphthoic hydrazide (BMH) which is the derivative of 3- hydroxy- 2- naphthoic hydrazide (HNH) is particularly preferred since it is markedly effective.

The above naphthoic hydrazide compounds may be used alone or in combination of two or more kinds thereof, and they can be used in combination with the antioxidants described above.

In the present invention, a blending amount of carbon black which is a reinforcing filler constituting the low sulfur concentration rubber composition described above is preferably 50 parts by mass or less based on 100 parts by mass of the rubber component. It is more preferably 30 to 45 parts by mass.

Controlling a use amount of carbon black in the range described above decreases restriction thereof to the rubber chemicals such as the effects of zinc oxide and the antioxidant and/or the naphthoic hydrazide compound and makes it possible to sufficiently exhibit the targeted effects.

The kind of carbon black shall not specifically be restricted and includes, for example, FEF, HAF, ISAF, and SAF.

When the composite of the present invention is used as a member for a tire, it is particularly preferably used as a member which is not brought into direct contact with the ambient air since the effects of the above composite can effectively be put to practical use.

When the composite described above, particularly the low sulfur concentration rubber composition is used as a member which is brought into direct contact with the ambient air, an effect of a reduction in the physical properties brought about by oxidative degradation is exerted to a large extent, and the effects of the present invention are relatively reduced.

In addition to the various components described above, components such as stearic acid, a softening agent, a vulcanization accelerating aid, and a wax which are used usually in the rubber industry as long as the effects of the present invention are not damaged can suitably be blended into the low sulfur concentration rubber composition and the high sulfur concentration rubber composition which are used for the rubber composite of the present invention.

These rubber compositions are obtained by kneading by means of a kneading machine such as a roll, an internal mixer, and a Banbury mixer and turned into composites by a conventional method, and they are vulcanized after subjected to building and working and are used in the form of a composite of a steel cord coating rubber member which is the high sulfur concentration rubber composition in the tire of the present invention for a heavy load with a rubber member which is the low sulfur concentration rubber composition adjacent thereto.

According to the present invention, capable of being provided are a rubber composite improved in a problem originating in a difference in a concentration of a blending agent, particularly sulfur between adjacent rubber compositions comprising a rubber composition cross-linked by sulfur without using new raw materials and members and a tire prepared by using the same.

EXAMPLES

Next, the present invention shall be explained in further details with reference to examples, but the present invention shall by no means be restricted by these examples.

Various measurements in the respective examples and comparative examples were carried out by the following methods.

Examples 1 to 5, Comparative Examples 1 to 5 and Reference Example 1

<Preparation of composites>

High sulfur concentration-blended and low sulfur concentration-blended rubber compositions were prepared based on blend compositions shown in Table 1 according to an ordinary method, and the respective rubber sheets (thickness: 20 mm) were prepared according to combinations of the high sulfur concentration-blended and low sulfur concentration-blended rubber compositions shown in Table 2. Then, they were stuck together and vulcanized at 130°C for 240 minutes to obtain the respective rubber composites.

<Evaluation of the composites>

The rubber composites thus prepared were subjected to an aging test on the conditions of 80°C and 20 days in a nitrogen atmosphere.

The sample after the aging test was sliced parallel to a stuck surface, and samples were punched out from the sliced rubber (thickness: 1.5 mm) at portions apart by 1 mm and 15 mm from an interface in the low sulfur concentration-blended rubber composition to determine a cutting tensile stress (hereinafter referred to as TSb) based on JIS K 6521: 2004. The sample obtained at the portion apart by 1 mm from the interface was referred to as "vicinity of interface", and the sample obtained at the portion apart by 15 mm from the interface was referred to as "inside".

The cutting tensile stresses before aging and after aging are shown by an index, wherein TSb of "inside" in the respective samples is set as 100, and a ratio of TSb of "vicinity of interface" thereto is determined. A larger difference between the respective numerical values shows that a difference between TSb in a central part of the member in the rubber composite and TSb in the vicinity of an interface to other adjacent members is larger. The evaluation results thereof are shown in Table 2.

Table 1

| Rubber composition No. | High sulfur concentration blend 1 | High sulfur concentration blend 2 | Low sulfur concentration blend 1 | Low sulfur concentration blend 2 | Low sulfur concentration blend 3 | Low sulfur concentration blend 4 | Low sulfur concentration blend 5 | Low sulfur concentration blend 6 | Low sulfur concentration blend 7 | Low sulfur concentration blend 8 | Low sulfur concentration blend 9 |
|---|---|---|---|---|---|---|---|---|---|---|---|
| Natural rubber[*1] (mass part) | 100 | 100 | 100 | 100 | 100 | 100 | 100 | 100 | 100 | 100 | 100 |
| Carbon black[*2] (mass part) | 50 | 50 | 40 | 40 | 40 | 40 | 40 | 40 | 40 | 55 | 55 |
| Antioxidant 6PPD[*3] (mass part) | 1 | 1 | 1 | 1 | 1 | 1 | 2 | 1.5 | 3 | 2 | 1 |
| Antioxidant 6PPD (mole) | - | - | 0.0037 | 0.0037 | 0.0037 | 0.0037 | 0.0075 | 0.0056 | 0.0111 | 0.0075 | 0.0037 |
| Naphthoic hydrazide[*4] (mass part) | - | - | - | - | - | - | - | 1 | - | - | - |
| Naphthoic hydrazide (mole) | - | - | - | - | - | - | - | 0.0035 | - | - | - |
| Stearic acid (mass part) | 1 | 1 | 2 | 2 | 2 | 2 | 2 | 2 | 2 | 2 | 2 |
| Zinc oxide (mass part) | 5 | 5 | 3 | 3 | 5 | 7 | 5 | 5 | 5 | 5 | 5 |
| Vulcanization accelerating agent[*5] (mass part) | 0.6 | 0.6 | 0.8 | 0.8 | 0.8 | 0.8 | 0.8 | 0.8 | 0.8 | 0.8 | 0.8 |
| Sulfur (mass part) | 6 | 4 | 2 | 3 | 2 | 2 | 2 | 2 | 2 | 2 | 2 |

Remarks:

*1: Natural rubber RSS #3

*2: Carbon black N330

*3: Amine base antioxidant "SANTOFLEX 6PPD", manufactured by FLEXSIS Inc.; a mole value was calculated from a gram value of blended parts by mass based on 100 parts by mass of the rubber component assuming that a molecular weight was 268.4

*4: naphthoic hydrazide: 3-hydroxy-N'-(1,3-dimethylbutylidene)-2-naphthoic hydrazide; a mole value was calculated from a gram value of blended parts by mass based on 100 parts by mass of the rubber component assuming that a molecular weight was 284.4

*5: Vulcanization accelerating agent: N,N-dicyclohexyl-2-benzothiazylsulfeneamide, trade name "Nocceler DZ-G", manufactured by Ouchi Shinko Chemical Industrial Co., Ltd.

Table 2

| | | Comparative Example | | | | Example | | | | Reference Example | Example | Comparative Example |
|---|---|---|---|---|---|---|---|---|---|---|---|---|
| | | 1 | 2 | 3 | 4 | 1 | 2 | 3 | 4 | 1 | 5 | 5 |
| Rubber composite (combination) | High sulfur concentration blend Composition No. | 1 | 1 | 1 | 1 | 1 | 1 | 1 | 1 | 2 | 2 | 1 |
| | Low sulfur concentration blend Composition No. | 1 | 2 | 3 | 4 | 5 | 6 | 7 | 8 | 2 | 7 | 9 |
| Difference in sulfur concentration between high sulfur concentration blend and low sulfur concentration blend (mass part) | | 4 | 3 | 4 | 4 | 4 | 4 | 4 | 4 | 1 | 2 | 4 |
| Zinc oxide mass part: equation (I) | >Sb X 1.3 + (Sa-Sb) × 0.3 | 3.8 | 4.8 | 3.8 | 3.8 | 3.8 | 3.8 | 3.8 | 3.8 | 4.2 | 3.2 | 3.8 |
| Blend amount (mass part) of zinc oxide | | 3 | 3 | 5 | 7 | 5 | 5 | 5 | 5 | 3 | 5 | 5 |
| Antioxidant and/or naphthoic hydrazide (mole): equation (II) | >0.005 + (Sa - Sb)/ 2000 | 0.0070 | 0.0065 | 0.0070 | 0.0070 | 0.0070 | 0.0070 | 0.0070 | 0.0070 | 0.0055 | 0.0060 | 0.0070 |
| Antioxidant and/or naphthoic hydrazide blend amount (mole) | | 0.0037 | 0.0037 | 0.0037 | 0.0037 | 0.0075 | 0.0091 | 0.0112 | 0.0075 | 0.0037 | 0.0112 | 0.0037 |
| Zinc oxide mass part: equation (III) | ≧Sb × 1.5 + (Sa -Sb) × 0.5 | 5 | 6 | 5 | 5 | 5 | 5 | 5 | 5 | 5 | 4 | 5 |
| Blend amount (mass part) of zinc oxide | | 3 | 3 | 5 | 7 | 5 | 5 | 5 | 5 | 3 | 5 | 5 |

(continued)

| | | Comparative Example | | | | Example | | | | Reference Example | Example | Comparative Example |
|---|---|---|---|---|---|---|---|---|---|---|---|---|
| | | 1 | 2 | 3 | 4 | 1 | 2 | 3 | 4 | 1 | 5 | 5 |
| Antioxidant and/or naphthoic hydrazide (mole): equation (IV) | >0.005 + (Sa - Sb)/ 1000 | 0.0090 | 0.0080 | 0.0090 | 0.0090 | 0.0090 | 0.0090 | 0.0090 | 0.0090 | 0.0060 | 0.0070 | 0.0090 |
| Antioxidant and/or naphthoic hydrazide blend amount (mole) | | 0.0037 | 0.0037 | 0.0037 | 0.0037 | 0.0075 | 0.0091 | 0.0112 | 0.0075 | 0.0037 | 0.0112 | 0.0037 |
| Cutting tensile stress (TSb) before aging test | Inside | 100 | 100 | 100 | 100 | 100 | 100 | 100 | 100 | 100 | 100 | 100 |
| | Vicinity of interface (INDEX) | 96 | 96 | 96 | 97 | 97 | 97 | 97 | 96 | 98 | 98 | 95 |
| Cutting tensile stress (TSb) after aging test | Inside | 100 | 100 | 100 | 100 | 100 | 100 | 100 | 100 | 100 | 100 | 100 |
| | Vicinity of interface (INDEX) | 83 | 84 | 85 | 86 | 88 | 92 | 91 | 89 | 99 | 93 | 87 |

EP 2 060 390 B1

The following can be found from Table 2.

It can be found that in Examples 1 to 5 of the present invention, the indices of the cutting tensile stresses (TSb) after the aging test are improved as compared with those in Comparative Examples 1 to 5 and that they are improved in an order of the composites satisfying the requisites (I) and (II) described above at the same time and the composites satisfying the requisites (III) and (IV) described above at the same time.

It can be found that in the composite prepared in Reference Examples 1, a difference in a concentration of sulfur contained in the rubber composition blended with high concentration sulfur and the rubber composition blended with low concentration sulfur is as small as 1 part by mass and that the cutting tensile stress (TSb) after the aging test is as high as 99, and It can be found that in Example 7, the index described above is improved to 93.

INDUSTRIAL APPLICABILITY

The present invention can provide a rubber composite improved in a problem originating in a difference in a concentration of a blending agent, particularly sulfur between adjacent rubber compositions comprising a rubber composition cross-linked by sulfur without using new raw materials and members and a tire prepared by using the same.

In particular, the present invention can be applied to tires for a heavy load in the form of a composite of a steel cord coating rubber member which is a high sulfur concentration rubber composition and a rubber member which is a low sulfur concentration rubber composition adjacent thereto.

**Claims**

1. A rubber composite constituted of at least two layers of members comprising a rubber composition containing a diene base rubber cross-linked by sulfur, wherein a difference in a concentration of sulfur between adjacent members in the rubber composite described above is 1.5 part by mass or more based on 100 parts by mass of a rubber component in the rubber composition described above; zinc oxide is blended in an amount satisfying a condition shown in the following equation (I) based on 100 parts by mass of a rubber component in a low sulfur concentration rubber composition among the adjacent members, and an antioxidant and/or a naphthoic hydrazide compound are blended in an amount satisfying a condition shown in the following equation (II) based on 100 parts by mass of the rubber component in the low sulfur concentration rubber composition:

```
blending amount (parts by mass) of zinc oxide in the low sulfur concentration rubber composition>Sb × 1.3 + (Sa −

Sb) × 0.3                     (I)
```

(wherein Sa represents a blending amount (parts by mass) of sulfur in the high sulfur concentration rubber composition, and Sb represents a blending amount (parts by mass) of sulfur in the low sulfur concentration rubber composition) and

```
blending amount (mole) of the antioxidant and/or the naphthoic hydrazide compound in the low sulfur concentration rubber composition>0.005 + (Sa − Sb)/2000        (II)
```

(wherein Sa and Sb represent the same contents as described in the equation (I)).

2. The rubber composite according to claim 1, wherein a blending amount of zinc oxide based on 100 parts by mass of the rubber component in the low sulfur concentration rubber composition described above is an amount satisfying a condition shown in the following equation (III), and a blending amount of the antioxidant and/or the naphthoic hydrazide compound is an amount satisfying a condition shown in the following equation (IV):

```
blending amount (parts by mass) of zinc oxide in the low sulfur concentration rubber composition≧Sb × 1.5 + (Sa -

Sb) × 0.5                    (III)
```

(wherein Sa and Sb represent the same contents as described in the equation (I)) and

```
blending amount (mole) of the antioxidant and/or the naphthoic hydrazide compound in the low sulfur concentration rubber composition>0.005 + (Sa - Sb)/1000          (IV)
```

(wherein Sa and Sb represent the same contents as described in the equation (I)).

3. The rubber composite according to claim 1 or 2, wherein at least 50 % by mass of the antioxidant and/or the naphthoic hydrazide compound blended into the low sulfur concentration rubber composition is an amine base antioxidant and/or a derivative of 3- hydroxy- 2- naphthoic hydrazide.

4. The rubber composite according to any of claims 1 to 3, wherein at least 50 % by mass of the rubber component constituting the low sulfur concentration rubber composition is polyisoprene.

5. The rubber composite according to any of claims 1 to 4, wherein a blending amount of carbon black which is a reinforcing filler constituting the low sulfur concentration rubber composition is 50 parts by mass or less based on 100 parts by mass of the rubber component.

6. A tire **characterized by** using the rubber composite according to any of claims 1 to 5 as a member which is not brought into direct contact with the ambient air.

7. The tire according to claim 6, wherein it is a tire for a heavy load.

**Patentansprüche**

1. Kautschukverbundstoff, der aus mindestens zwei Lagen von Teilen besteht, die eine Kautschukzusammensetzung umfassen, die einen Kautschuk auf Dienbasis enthält, der durch Schwefel vernetzt ist, wobei ein Unterschied in einer Schwefelkonzentration zwischen aneinanderliegenden Teilen in dem oben beschriebenen Kautschukverbundstoff 1,5 Massenteile oder mehr, auf 100 Massenteile einer Kautschukkomponente in der oben beschriebenen Kautschukzusammensetzung bezogen, beträgt; Zinkoxid in einer Menge, die einer Bedingung, die in der folgenden Gleichung (I) gezeigt ist, auf 100 Massenteile einer Kautschukkomponente in einer Kautschukzusammensetzung geringer Schwefelkonzentration bezogen entspricht, unter aneinanderliegenden Teilen eingemischt ist, und ein Antioxidationsmittel und/oder eine Naphtoesäurehydrazidverbindung in einer Menge eingemischt sind, die einer Bedingung, die in der folgenden Gleichung (II) gezeigt ist, auf 100 Massenteile der Kautschukkomponente in der Kautschukzusammensetzung geringer Schwefelkonzentration entspricht:

$$\text{Vermischungsmenge (Massenteile) Zinkoxid in der Kautschukzusammensetzung}$$
$$\text{geringer Schwefelkonzentration} > Sb \times 1{,}3 + (Sa - Sb) \times 0{,}3 \qquad \text{(I)}$$

(wobei Sa eine Vermischungsmenge (Massenteile) Schwefel in der Kautschukzusammensetzung hoher Schwefelkonzentration darstellt und Sb eine Vermischungsmenge (Massenteile) Schwefel in der Kautschukzusammensetzung geringer Schwefelkonzentration darstellt) und

Vermischungsmenge (Mol) des Antioxidationsmittels und/oder der Naphthoesäurehydrazidverbindung in der Kautschukzusammensetzung geringer Schwefelkonzentration $> 0{,}005 + (Sa - Sb)/2000$ (II)

(wobei Sa und Sb die gleichen Gehalte, wie in der Gleichung (I) beschrieben, darstellen).

2. Kautschukverbundstoff nach Anspruch 1, wobei eine Vermischungsmenge von Zinkoxid, auf 100 Massenteile der Kautschukkomponente in der oben beschriebenen Kautschukzusammensetzung geringer Schwefelkonzentration bezogen, eine Menge ist, die einer Bedingung, die in der folgenden Gleichung (III) gezeigt ist, entspricht und eine Vermischungsmenge des Antioxidationsmittels und/oder der Naphthoesäurehydrazidverbindung eine Menge ist, die einer Bedingung, die in der folgenden Gleichung (IV) gezeigt ist, entspricht:

Vermischungsmenge (Massenteile) Zinkoxid in der Kautschukzusammensetzung geringer Schwefelkonzentration $\geq Sb \times 1{,}5 + (Sa - Sb) \times 0{,}5$ (III)

(wobei Sa und Sb die gleichen Gehalte, wie in der Gleichung (I) beschrieben, darstellen) und

Vermischungsmenge (Mol) des Antioxidationsmittels und/oder der Naphthoesäurehydrazidverbindung in der der Kautschukzusammensetzung geringer Schwefelkonzentration $> 0{,}005 + (Sa - Sb)/1000$ (IV)

(wobei Sa und Sb die gleichen Gehalte, wie in der Gleichung (I) beschrieben, darstellen).

3. Kautschukzusammensetzung nach Anspruch 1 oder 2, wobei mindestens 50 Masse- % des Antioxidationsmittels und/ oder der Naphthoesäurehydrazidverbindung, die in die Kautschukzusammensetzung geringer Schwefelkonzentration eingemischt sind ein Antioxidationsmittel auf Aminbasis und/ oder ein Derivat von 3- Hydroxy- 2- napthoesäurehydrazid sind.

4. Kautschukzusammensetzung nach einem der Ansprüche 1 bis 3, wobei mindestens 50 Masse-% der Kautschukkomponente, die die Kautschukzusammensetzung geringer Schwefelkonzentration bildet, Polyisopren ist.

5. Kautschukzusammensetzung nach einem der Ansprüche 1 bis 4, wobei eine Vermischungsmenge Ruß, der ein verstärkender Füllstoff ist, der die Kautschukzusammensetzung geringer Schwefelkonzentration bildet, 50 Massenteile oder weniger, auf 100 Massenteile der Kautschukkomponente bezogen, ist.

6. Reifen, **gekennzeichnet durch** Verwendung des Kautschukverbundstoffs nach einem der Ansprüche 1 bis 5 als Teil, der nicht in direkten Kontakt mit der Umgebungsluft gebracht wird.

7. Reifen nach Anspruch 6, wobei er ein Reifen für eine schwere Last ist.

**Revendications**

1. Composite de caoutchouc constitué d'au moins deux couches d'éléments comprenant une composition de caoutchouc contenant un caoutchouc à base de diène réticulé avec du soufre, dans lequel une différence dans une concentration de soufre entre les membres adjacents dans le composite de caoutchouc décrit ci-dessus est de 1,5 partie en masse ou plus sur la base de 100 parties en masse d'un composant de caoutchouc dans la composition de caoutchouc décrite ci-dessus; l'oxyde de zinc est mélangé en une quantité satisfaisant une condition présentée dans l'équation suivante (I) sur la base de 100 parties en masse d'un composant de caoutchouc dans une composition de caoutchouc à faible concentration en soufre parmi les membres adjacents, et un antioxydant et/ou un composé d'hydrazide naphtoïque sont mélangés en une quantité satisfaisant une condition présentée dans l'équation suivante (II) sur la base de 100 parties en masse du composant de caoutchouc dans la composition de caoutchouc à faible

concentration en soufre:

$$\text{quantité de mélange (parties en masse) de l'oxyde de zinc dans la composition de caoutchouc à faible concentration en soufre} > Sb \times 1{,}3 + (Sa - Sb) \times 0{,}3 \qquad (I)$$

(dans laquelle Sa représente une quantité de mélange (parties en masse) de soufre dans la composition de caoutchouc à concentration élevée en soufre, et Sb représente une quantité de mélange (parties en masse) de soufre dans la composition de caoutchouc à faible concentration en soufre) et

$$\text{quantité de mélange (en moles) de l'antioxydant et/ou du composé d'hydrazite naphtoïque dans la composition de caoutchouc à faible teneur en soufre} > 0{,}005 + (Sa - Sb)/2000 \qquad (II)$$

(dans laquelle Sa et Sb représentent les mêmes teneurs que décrites dans l'équation (I)).

2. Composite de caoutchouc selon la revendication 1, dans lequel une quantité de mélange d'oxyde de zinc sur la base de 100 parties en masse du composant de caoutchouc dans la composition de caoutchouc à faible teneur en soufre décrite ci-dessus est une quantité satisfaisant une condition présentée dans l'équation suivante (III), et une quantité de mélange de l'antioxydant et/ou du composé hydrazide naphtoïde est une quantité satisfaisant une condition présentée dans l'équation suivante (IV):

$$\text{quantité de mélange (parties en masse) d'oxyde de zinc dans la composition de caoutchouc à faible concentration en soufre} \geq Sb \times 1{,}5 + (Sa - Sb) \times 0{,}5 \qquad (III)$$

(dans laquelle Sa et Sb représentent les mêmes teneurs que décrites dans l'équation (I)) et

$$\text{quantité de mélange (en moles) de l'antioxydant et/ou du composé d'hydrazide naphtoïque dans la composition de caoutchouc à faible concentration en soufre} > 0{,}005 + (Sa - Sb)/1000 \qquad (IV)$$

(dans laquelle Sa et Sb représentent les mêmes teneurs que décrites dans l'équation (I)).

3. Composite de caoutchouc selon la revendication 1 ou 2, dans lequel au moins 50 % en masse de l'antioxydant et/ou du composé d'hydrazide naphtoïque mélangé dans la composition de caoutchouc à faible concentration en soufre est un oxydant à base d'amine et/ou un dérivé d'hydrazide 3- hydroxy- 2- naphtoïque.

4. Composite de caoutchouc selon l'une quelconque des revendications 1 à 3, dans lequel au moins 50 % en masse du composant de caoutchouc constituant la composition de caoutchouc à faible concentration en soufre est du polyisoprène.

5. Composite de caoutchouc selon l'une quelconque des revendications 1 à 4, dans lequel une quantité de mélange de noir de carbone qui est une charge de renfort constituant la composition de caoutchouc à faible concentration en soufre représente 50 parties en masse ou moins sur la base de 100 parties en masse du composant de caoutchouc.

6. Pneumatique **caractérisé par** l'utilisation du composite de caoutchouc selon l'une quelconque des revendications 1 à 5 comme élément qui n'est pas porté au contact direct de l'air ambiant.

7. Pneumatique selon la revendication 6, dans lequel il s'agit d'un pneumatique pour charge lourde.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005067358 A
- JP 2005075888 A

- EP 1258338 A